# EUROPÄISCHE PATENTSCHRIFT

(11) **EP 0 820 619 B1**
(45) Veröffentlichungstag und Bekanntmachung des Hinweises auf die Patenterteilung: **08.03.2000**
(21) Anmeldenummer: 96910959.4
(22) Anmeldetag: 11.04.1996
(51) Int. Cl.: G07C 5/08, G01P 1/12

(54) **FAHRDATENREGISTRIERGERÄT FÜR KRAFTFAHRZEUGE**
DRIVING DATA RECORDING DEVICE FOR MOTOR VEHICLES
DISPOSITIF D'ENREGISTREMENT DE DONNEES DE MARCHE POUR VEHICULES A MOTEUR

(30) Priorität: 13.04.1995 DE 19514008
(43) Veröffentlichungstag der Anmeldung: 28.01.1998
(73) Patentinhaber: Mannesmann VDO AG, 60326 Frankfurt (DE)
(72) Erfinder: LAIS, Norbert, D-78052 Villingen-Schwenningen (DE)
(86) Internationale Anmeldenummer: EP9601544
(87) Internationale Veröffentlichungsnummer: WO9632699

(56) Entgegenhaltungen:
- EP-A- 0 621 564
- DE-U- 9 316 639
- DE-U- 9 418 613
- FR-A- 2 590 027
- FR-A- 2 635 894

## Beschreibung

Die Erfindung betrifft ein Fahrdatenregistriergerät für Kraftfahrzeuge mit einer Einrichtung zum Erfassen von zeit- und/oder Geschwindigkeitsabhängigen Fahrdaten.

Derartige, üblicherweise als Fahrtschreiber bezeichnete Geräte mit elektronischer Datenregistrierung sind bekannt aus der EP 0 188 429 B1 bzw. aus der EP 0 191 413 B1. Andererseits sind solche Fahrtschreiber weit verbreitet, bei denen die Fahrdaten unmittelbar auf Diagrammscheiben aufgezeichnet werden.

FR-A-2 635 894 offenbart einen Betriebstundenzähler, insbesondere für Verbrennungsmotoren, der Schwingungen z.B. eines zu überwachenden Motors erfaßt, um dessen Betriebszustand zu erkennen und seine Betriebsdauer zu messen. Zur Erfassung der Motorschwingungen liegt ein Detektor (10) direkt an dem zu überwachenden Motor. Die Auswertung des Detektorsignals erfolgt mittels eines Mikroprozessors (15).

DE-U-93 16 639 beschreibt einen Impulsgeber zur Erfassung der Fahrgeschwindigkeit eines Fahrzeugs, der durch Zähne eines Zahnrads eines Fahrzeuggetriebes angesteuert wird und auch Vorstufen zur Verarbeitung der erfaßten Daten enthält (Sensorelektronik 12, Impulsteiler 13). Jedoch umfaßt dieser Impulsgeber keine Speicherelektronik und stellt somit kein Fahrdatenregistriergerät dar.

Fahrtschreiber werden vorwiegend aufgrund gesetzlich vorgegebener Bestimmungen vorzugsweise in Lastkraftwagen eingebaut und dienen bekanntlich dazu, Daten zur Kennzeichnung von Transportleistungen so zu speichern, daß Fahrern, Fahrzeughaltern und behördlichen Kontrollorganen eine einfache und verläßliche Rekonstruktion des Fahrt- bzw. Bewegungsablaufes des betreffenden Fahrzeuges ermöglicht wird. Geräte dieser Art haben das Führen von Fahrtenbüchern weitestgehend abgelöst, müssen aber aus diesem Grund in gleichem Maße in der Lage sein, uhrzeitrichtige Fahrzeugdaten, d.h. Geschwindigkeiten, zurückgelegte Strecken, Stillstandszeiten und gegebenenfalls weitere fahrzeugbezogene Daten zu registrieren.

Obwohl Fahrtschreiber mit Diagrammscheiben sich in der Praxis bewährt haben, aber auch elektronische Speicherkarten und -kassetten als Fahrdaten-Speicher geeignet wären, muß aufgrund der besonderen Wettbewerbssituation im Transportgewerbe nach wie vor mit Versuchen gerechnet werden, die üblichen Fahrtschreiber oder deren Datenträger in betrügerischer Absicht zu manipulieren. Die Absicherung der genannten Geräte gegen naheliegende Manipulationsversuche ist mit gewissem Aufwand möglich, verursacht aber zwangsläufig bei der Herstellung und der Montage solcher Geräte zusätzliche Kosten, so daß eine absolute Manipulationssicherheit nur mit unangemessen hohem Aufwand sichergestellt werden kann.

Diese Manipulationsproblematik sowie z.B. die Verpflichtung der Fahrer, beschriebene Datenträger als Fahrten-Beleg für einen oder mehrere Vortage vorweisen zu können, sind im bereits genannten Stand der Technik näher erläutert und sollen zur Vermeidung einer unnötig langen Beschreibungseinleitung an dieser Stelle nicht im einzelnen wiederholt werden.

Der Erfindung liegt daher die Aufgabenstellung zugrunde, ein Fahrdatenregistriergerät zu schaffen, welches eine wesentlich verbesserte Manipulationssicherheit gegen absichtliche die Datenerfassung beeinflussende oder nachträglich vorgenommene Manipulationsversuche aufweist, gleichzeitig aber wesentlich kostengünstiger herzustellen ist als die bisher bekannten Fahrtschreiber.

Die Erfindung löst die gestellte Aufgabe in überraschender und in Hinblick auf eine Verbesserung der Kosten-Nutzen-Relation der erfindungsgemäßen Geräte in signifikanter Weise dadurch, daß ein rein elektronisches, im wesentlichen digital arbeitendes Fahrdatenregistriergerät vorgesehen wird, welches in miniaturisierter Bauform direkt an oder in einer Gehäuseschale eines Fahrzeuggetriebes angebracht und mit einer temperaturunempfindlichen Prozessor- und Speicherelektronik ausgestattet ist. Gemäß der Erfindung befindet sich dabei die für Registrier- und Speichervorgänge erforderliche Elektronik komplett in einem einzigen Gerät und ist von optional anschließbaren Zusatzgeräten bzw -instrumenten unabhängig. Darüberhinaus benötigt es nur eine geringe Anzahl von Anschlußleitungen und besitzt auch nur geringen elektrischen Leistungsbedarf. Das erfindungsgemäße Fahrdatenregistriergerät weist dabei eine genügend große Speicherfähigkeit für registrierte Fahrdaten auf, welche bei fehlender Versorgungsspannung eines solchen Gerätes dennoch gesichert, d.h. permanent gespeichert sind.

Das erfindungsgemäße Fahrdatenregistriergerät weist eine erheblich verkleinerte Bauform und deutlich günstigere Nutzungsvorteile (insbesondere in Hinblick auf Montage- und Wartungskosten) im Vergleich zu herkömmlichen Geräten vergleichbarer Art auf. Trotzdem stehen den Nutzern solcher Geräte vielfältige Bedienungs- und Gebrauchs-Vorteile zur Verfügung, die praktisch nur durch digital arbeitende Elektronik bereitgestellt werden können. Hierzu zählt insbesondere die direkte, detaillierte und uhrzeitrichtige Abrufmöglichkeit von zeit- bzw. wegabhängigen Fahrzeuggeschwindigkeiten, die uhrzeitrichtige Zuordnung von Fahrzeugzuständen sowie die Möglichkeit, die unterschiedlichsten Anzeigegeräte (Displays) und Auswertegeräte (Terminals) anschließen zu können, von denen im Normalfall aber nur einige fest im Fahrzeug installiert sind.

Das erfindungsgemäße Fahrdatenregistriergerät ist aufgrund seiner rein digitalen Wirkungsweise in an sich bekannter Weise für eine Mehrzahl von Zusatzanforderungen geeignet, die über die obengenannten Grundfunktionen hinausgehen.

Hierzu zählen folgende Funktionen:
- leichte Anpassbarkeit des Gerätes an unterschiedliche Fahrzeugtypen und deren Motor- oder Getriebevarianten
- Anbindungsmöglichkeit an eine exakte, absolute Uhrzeit.

Dies wird einerseits erreicht durch geeignete Schnittstellen, über die das Gerät die interessierenden Daten an die Außenwelt abgeben und in vergleichbarer Weise von außen durch geeignete Daten programmiert oder synchronisiert werden kann, andererseits werden die genannten speziellen Funktionen eines solchen Gerätes durch vorgesehene interne Speicher eingerichtet, welche zum Teil umprogrammierbar sind oder welche (elektronische) Anpasstabellen aufweisen.

Die Erfindung geht von der Erkenntnis aus, daß es unter Nutzung geeigneter Prozessor- und Speichersysteme möglich ist, alle essentiellen Systemkomponenten eines Fahrdatenregistriergerätes inclusive einer Not-Stromversorgung in einem einzigen, kompakten Gehäuse zu vereinen, und ein solches kompaktes Fahrdatenregistriergerät direkt in das Getriebegehäuse eines herkömmlichen KFZ-Getriebes einzusetzen. Aufgrund seiner Konstruktion und der verwendeten Systemkomponenten ist es hinreichend gegen vergleichweise hohe Temperaturschwankungen bei Plazierung in Motornähe geschützt.

Wie im KFZ-Sektor üblich, wird als Bezugspotentialleitung für die elektrische Spannungsversorgung und für Signalleitungen das Chassis eines jeweiligen KFZ bzw. die mit diesem in fester Verbindung stehenden metallischen Aufbauten und Aggregate gewält. Unter dieser Voraussetzung ist es erfindungsgemäß möglich, das Fahrdatenregistriergerät mit maximal drei externen Verbindungs-Leitungen zu versehen, nämlich mit einer Spannungsversorgungsleitung, mit einer Wegsignalleitung und mit einer sogenannten Schnittstellenleitung.

Hierbei dient die Wegsignalleitung im wesentlichen zur Weiterleitung von Informationen an ein Wegstreckenzählgerät bzw. einen Tachometer, welcher sich gewöhnlich im Blickfeld des Fahrers befindet und diesem in gewohnter Weise die Anpassung der Fahrgeschwindigkeit an die jeweilige Fahrsituation und ferner die Bestimmung eines aktuellen Kilometerstandes des Fahrzeuges ermöglicht.

Die Schnittstellenleitung des Fahrdatenregistriergerätes ist bidirektional, d.h. obwohl der Signalfluß im wesentlichen an ein zugeordnetes Anzeigegerät abgegeben wird, besteht auch die Möglichkeit des Datentransfers von diesem oder einem weiteren fest eingebauten Datensichtgerät mit erweitertem Anzeigeumfang und manuell zu betätigenden Stellelementen. Ein solches erweitertes Anzeigegerät (Display) ist gewöhnlich dafür ausgelegt und geeignet, weitere Daten entgegenzunehmen, die nicht vom Fahrdatenregistriergerät erzeugt worden sind, sondern sich z.B. auf aktuelle Motorkennwerte und weitere fahrzeugrelevante Informationen beziehen. Hierzu gehört z.B. auch die Auswertung und Darstellung eines drahtlos empfangenen exakten Uhrzeit- oder geografischen Positionssignals.

Zusätzlich ist es gemäß der Erfindung möglich, mittels der sog. Schnittstellenleitung ein mobiles Auslese/Programmiergerät (Terminal) anzuschließen, mit dem nicht nur eine Funktionskontrolle des Fahrdatenregistriergerätes möglich ist, sondern auch alle in diesem gespeicherten Informationen ausgelesen werden können, zusätzlich bietet ein solches Auslese/Programmiergerät die Möglichkeit, diejenigen Informationsspeicher innerhalb des Fahrdatenegistriergerätes neu- oder umzuprogrammieren, die entweder einmalig oder mehrfach beschrieben werden können, wie dies zum Beispiel für folgende Funktionen erforderlich ist:
- fahrzeugspezifische Koeffizienten zur Umrechnung von Impulszahl-Summen in tatsächlich gefahrene Strecken
- Datum der Inbetriebnahme eines Fahrdatenregistriergerätes
- Einstellung auf eine exakte, aktuelle Uhrzeit.

Gemäß der Erfindung besteht eine besondere Ausführungsform eines Fahrdatenregistriergerätes darin, daß die Leitung für das Wegsignal und die Leitung für die Spannungsversorgung zusammengefaßt werden, sofern hierfür drahtgebundene Leitungen vorgesehen sind.

Es ist ein weiterer Aspekt der Erfindung, zur Erhöhung der Stör- und Manipulationssicherheit gänzlich auf elektrische Verbindungsleitungen zu verzichten und nur mit Lichtleiter-Strängen als Verbindungsleitungen zwischen Fahrdatenregistriergerät und Außenwelt zu arbeiten. Hierfür ist eine externe Energieversorgung vorgesehen, welche über einen Lichtleiter das komplette Fahrdatenregistriergerät mit der erforderlichen optischen Leistung von ca. 100 mW versorgt, ferner eine optische Leitung für die Entgegennahme von externen beispielsweise Programmierdaten durch das Fahrdatenregistriergerät sowie eine Sendeleitung des Fahrdatenregistriergerätes für die gemultiplexte, d.h. verschachtelte Sendung von Weg- und Schnittstellensignalen. Diese Signale können in einer Ausführungsform des Fahrdatenregistriergerätes mit metallischen Signal- bzw. Verbindungsleitungen natürlich auch drahtgebunden übermittelt werden.

Gemäß der Erfindung besteht eine wirksame Maßnahme zur Erhöhung der Störsicherheit und zur Erschwerung von Manipulationen am Fahrdatenregistriergerät darin, die Spannungsversorgung des Systems nicht allein von einer externen Versorgung in Form elektrischer oder optischer Leistungszuführung abhängig zu machen. Vielmehr ist es ein weiterer Gegenstand der Erfindung, innerhalb des Fahrdatenregistriergerätes einen eigenen Stromerzeuger vorzusehen, welcher auf einen integrierten, vergleichsweise kleinen Generator zurückgreift, dessen bewegliches Element durch die Zähne eines Getriebezahnrades gebildet wird, welches gleichzeitig durch den im Fahrdatenregistriergerät angebrachten Sensor des Fahrdatenregistriergerätes abgetastet wird. Ein besonderer Aspekt der Erfindung beruht auf der Erkenntnis, daß beide, Sensor und Energieerzeuger, zu einer Einheit zusammengefaßt werden, um sowohl Volumen als auch Fertigungskosten des Fahrdatenregistriergerätes zu reduzieren.

Das Fahrdatenregistriergerät umfaßt gemäß der Erfindung innerhalb eines einzigen Gehäuses von nur einigen bis einigen zehn Kubikzentimetern Volumen, neben dem genannten Sensor und einer optionalen, gegebenenfalls mit dem Sensor kombinierten Spannungserzeugungseinheit folgende weitere zum System gehörige Komponenten:
- einen eigenständigen Zeitgeber für die Abgabe eines präzisen Zeitsignals, wobei der Zeitgeber mindestens einen Quarzoszillator aufweist und gegebenenfalls mit dem Signal
einer externen Uhr, optional auch einer Funkuhr synchronisiert wird,
- eine Rechen- bzw. Steuereinheit auf mikroelektronischer Basis ,
- mindestens eine elektronische Speichereinheit mit nichtflüchtigen Speicherinhalten,
- eine Energieversorgungseinheit und einer Energiespeichereinheit in Form eines Akkumulators oder Kondensators,
sowie
- eine Anpaßelektronik, welche die innerhalb und außerhalb des Fahrdatenregistriergerätes erzeugten Signale konvertiert unter Berücksichtigung der Eingangs- und Ausgangskennwerte des Fahrdatenregistriergerätes und der an dies angeschlossenen optischen oder elektrischen Leitungen.

Die vielfältigen Funktionen des Fahrdateregistriergerätes werden im folgenden anhand der Wirkungsweise der einzelnen, intern angeordneten Systemkomponenten erläutert. Zentraler Bestandteil des Fahrdatenregistriergerätes ist die erwähnte Steuereinheit, welche die durch den Sensor des Systems gelieferten Nutzdaten erfaßt und registriert, Steuerdaten zuordnet und verrechnet, Daten speichert oder ausgibt, sowohl das Datenregistriersystem als auch sich selbst überwacht und eine Koordination des Datenflusses aller intern generierter Daten durchführt und auch die Koordination des Datentransfers der von außen zu empfangenden bzw. dorthin abzugebenden Daten durchführt.

Da die grundlegende Funktion des erfindungsgemäßen Fahrdatenregistriergerätes auf der Erfassung von Wegimpulsen und zugehörigen, präzisen Zeitdaten beruht, wird an diese beiden Systemkomponenten eine erhöhte Anforderung in Hinblick auf Zuverlässigkeit und Genauigkeit gestellt.

Weitere im Zusammenhang mit den einzelnen Systemkomponenten der Erfindung zu erläuternde Aspekte werden im folgenden für ein bevorzugtes Ausführungsbeispiel der Erfindung anhand der Zeichnungen beschrieben.

Es zeigen
- Fig. 1: ein Blockdiagramm zur Übersichtsdarstellung der zentralen Komponennten eines erfindungsgemäßen Fahrdatenregistriergerätes und der an diesem angeschlossenen Peripheriegeräte.
- Fig. 2: ein detaillierteres Blockschaltbild eines erfindungsgemäßen Fahrdatenregistriergerätes
- Fig. 3: ein erstes Flußdiagramm der wichtigsten internen Datenflüsse eines erfindungsgemäßen Fahrdatenregistriergerätes
- Fig. 4: ein weiteres Flußdiagramm des Fahrdatenregistriergerätes
- Fig. 5: ein weiteres Flußdiagramm des Fahrdatenregistriergerätes
- Fig. 6: ein weiteres Flußdiagramm des Fahrdatenregistriergerätes

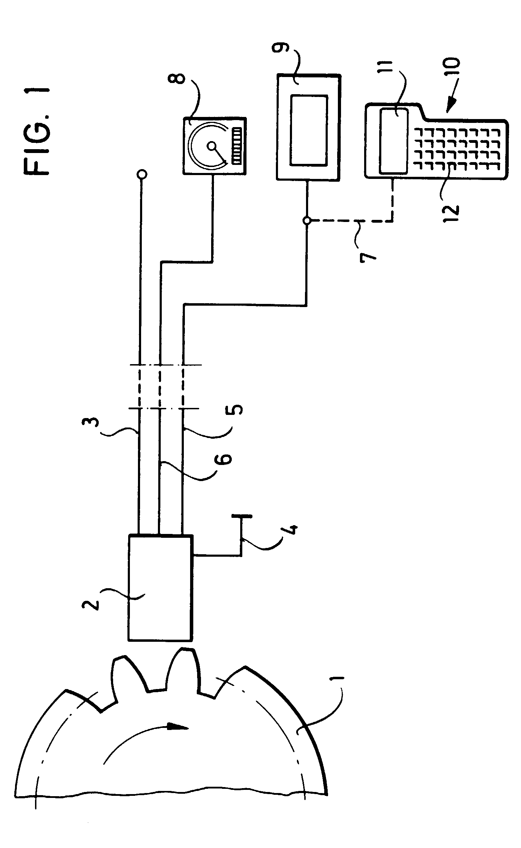

Wie Fig. 1 zeigt, ist das erfindungsgemäße Fahrdatenregistriergerät als Teil eines Gesamtsystems zu betrachten, welches aus Registrierteil und einem Anzeige- und Programmierteil besteht.

In einem vorgegebenen, vergleichsweise geringen Abstand zu einem symbolisch angedeuteten Getriebezahnrad 1 befindet sich das eigentliche Fahrdatenregistriergerät 2 in kompakter und im wesentlichen integrierter Bauweise, welches durch zumindest einen intern angebrachten Sensor die An- bzw. Abwesenheit eines nahe seiner vorderen Stirnseite vorbeilaufenden Getrieberad-Zahnes erkennen vermag. Das Fahrdatenregistriergerät 2 wird in einer technisch vereinfachten, aber nicht notwendigerweise kostengünstigsten Ausführungsform über eine Versorgungsleitung 3 ständig mit elektrischer Energie versorgt, wobei der Energiebedarf der Einheit vergleichsweise gering ist und aufgrund der integrierten Bauweise im Bereich unterhalb einiger 100 Milliwatt liegt. Das Fahrdatenregistriergerät 2 beinhaltet eine komplette Elektronik, eine erforderliche Spannungspufferung sowie die erforderlichen Leitungsanpaßstufen bzw. -vorrichtungen, wie sie für die Ausgabe-Signalleitung 6 und für die bidirektional wirkende Ein/Ausgabe-Signalleitungen 5 und 7 vorgesehen sind. Mit 4 ist die metallische Bezugspotentialverbindung bezeichnet.

Wie bereits oben erwähnt, sind die gezeigten Leitungen in einer kostengünstigen Ausführungsform drahtgebunden, während sie in einer Ausführung für erhöhten Stör- und Manipulationsschutz als Lichtleiter ausgelegt sind. Auch die Energieversorgungsleitung 3 wird in einer speziellen Ausführungsform als Lichtleiter ausgelegt und trägt die zuzuführende Energie in Form von Licht an das Fahrdatenregistriergerät 2 heran. In der drahtgebundenen Ausführung der Leitungen 3, 5, 6 und 7 besteht eine besondere Ausführungsform der Erfindung speziell darin, daß die Anzahl der vorgesehenen Verbindungsleitungen auf eine minimale Anzahl beschränkt ist, so daß im weitestgehenden Fall nur eine einzige Leitung vorhanden ist, welche Funktionen der Spannungsversorgung und der Signalübertragung wahrnehmen muß.

In dem in Fig. 1 dargestellten Ausführungsbeispiel ist die unidirektionale Signalleitung 6 für die Übertragung von Signaldaten an ein Anzeigegerät 8 (Tachometer) für die Fahrzeuggeschwindigkeit und den zurückgelegten Weg vorgesehen. Weiterhin ist in Fig. 1 gezeigt, daß eine bidirektionale Signalleitung 5 an ein fest installiertes Datensichtgerät (Display) 9 angeschlossen ist. Das Datensichtgerät 9 dient zur Anzeige von abgespeicherten Geschwindigkeitsverläufen über vergangene Zeiträume, insbesondere aber auch zur Darstellung von Fehlermeldungen des Fahrdatenregistriergerätes 2. Weiterhin ist das Datensichtgerät 9 zur Synchronisation des Fahrdatenregistriergerätes 2 vorgesehen. Von dem Datensichtgerät 9 können über eine Trennstelle die empfangenen Fahrdaten in direkter oder aufbereiteter Form optional an zusätzliche Vorrichtungen im KFZ weitergeleitet werden, so daß zum Beispiel eine Kontrolle des gesamten Registriersystems durch einen übergeordneten Bordrechner möglich ist, oder bei Bedarf durch einen stationären, über eine Funkverbindung mit dem Kraftfahrzeug in Verbindung stehenden Leitrechner. Weiterhin ist es möglich, an das Fahrdatenregistriergerät 2 ein mobiles Datensichtgerät (Terminal) 10 anzuschließen. Ein solches Terminal 11 dient zur Einsichtnahme und Darstellung spezieller Informationen wie zum Beispiel Histogrammen, Übersichten über eventuell aufgetretene Störungen, ferner zur Programmierung und Synchronisation des Fahrdatenregistriergerätes 2, insbesondere bei dessen erstmaliger Inbetriebnahme. Hierzu besitzt das mobile Datensichtgerät 10 eine Anzeigeeinheit 11 sowie eine Tatstatur 12. Das mobile Datensichtgerät 10 ist über die Signalleitung 7 an die Signalleitung 5 angeschlossen.

Wie bereits erwähnt, reduziert sich die Anzahl der Signalleitungen im günstigsten Falle auf eine elektrische Anschlußleitung, wobei wie üblich als Rückführungsleiter das KFZ-Chassis dient bzw. mit diesem elektrisch verbundene Gehäuseteile. Im Falle von Lichtleiter-Verbindungen kann die Anzahl der Verbindungsleitungen auf eine Versorgungsleitung eine Signaleingangsleitung und eine Signalausgangsleitung reduziert werden.

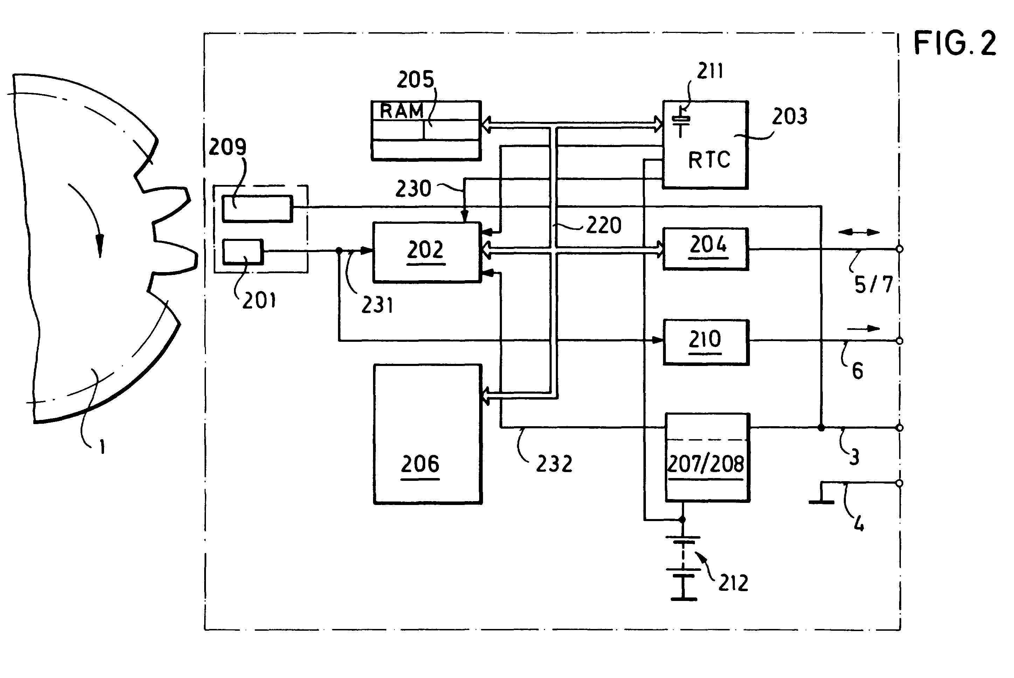

Fig. 2 zeigt das detaillierte Blockschaltbild eines erfindungsgemäßen Fahrdatenregistriergerätes 2. Dieses wird gemäß der Erfindung bevorzugt in eine vorgesehene Bohrung eines KFZ-Getriebegehäuses entweder eingeschraubt oder eingepresst, so daß das Fahrdatenregistriergerät 2 ohne Demontage des Getriebegehäuses nicht entfernbar ist. Gemäß der Bestimmung und erfindungsgemäßen Konstruktion des Fahrdatenregistriergerätes 2 wird die Bewegung der Zähne eines Zahnrades 1 mittels eines in der Nähe dieser Zähne angeordneten, geeigneten Sensors abgetastet. Von Wichtigkeit sind sowohl kleine Baugröße als auch Temperaturfestigkeit eines solchen Sensors, für die nach dem Stande der Technik verschiedene Ausführungsformen zur Verfügung stehen. Aus diesem Grunde werden Hall-Sensoren für erhöhte Temperaturen bevorzugt, wie sie z.B. in CMOS-Technologie hergestellt werden und deren extreme Sperrschichttemperaturen im Bereich von -40 bis 150 °C spezifiziert sind. ( z.B. Hall-Sensor Typ HAL 300 der Fa. ITT). Zum Detektieren der Zähne eines in der Nähe des Sensors vorbeilaufenden Zahnrades ist es im allgemeinen erforderlich, dem Hall-Sensor ein permanentmagnetisches Zusatzfeld zuzuordnen. Der Sensor 201 liefert bereits bei geringen Fahrzeuggeschwindigkeiten aufgrund der Bewegung der Zahnradzähne eine Impulsfolge, welche ein direktes Maß für den zurückgelegten Weg des KFZ ist. Er liefert darüberhinaus oberhalb einer vorgegebenen Fahrzeuggeschwindigkeit ein Signal von nutzbarer elektrischer Leistung, welches bei Bedarf, gemäß der Erfindung, gleichzeitig zum Nachladen einer geräteinternen Batterie herangezogen wird. Auf diese Weise kann der ordnungsgemäßen Betrieb des Fahrdatenregistriergerätes 2 entweder vollständig oder zumindest für eine gewisse Zeit aufrechterhalten werden, falls die Bestromung über die externe Versorgungsleitung 3 ausbleiben sollte.

Das vom Sensor 201 abgegebene Nutzsignal wird ggf. über eine Signalformungs-Stufe in geeignete, vorteilhafterweise impulsartige Form gebracht und gelangt über eine Leitung 231 auf einen von mehreren Interrupteingängen einer Steuereinheit 202, für die in Anlehnung an den Stand der Technik ein Mikroprozessor, Microcontroller oder eine andere geeignete digital arbeitende Mikroelektronikschaltung vorgesehen ist. Hierdurch aktualisiert z.B. die Steuereinheit 202 nach Maßgabe eines auszuführenden Programms bei jeder positiv ansteigenden Flanke eines solchen impulsartigen Signals diejenigen wegabhängigen Daten und gespeicherten Informationen, welche der späteren Rekonstruktion des Weg-Zeit-Verlaufes bzw. des Geschwindigkeits-Zeit-Verlaufs dienen. Die Steuereinheit 202 kann als Schaltzentrale des Fahrdatenregistriergerätes 2 aufgefaßt werden, da sie die gesamte Verwaltung und Bearbeitung der Daten koordiniert.Das vom Sensor 201 abgegebene Signal wird gleichzeitig auf eine Treiberstufe 210 geführt, welche das Signal so verstärkt bzw. umsetzt, daß es auf der Signalleitung 6 ein genügend großes Signal/Rauschverhältnis aufweist und welche auch dafür sorgt, daß zufällig oder bewußt herbeigeführte Fremdspannungen auf der Signalleitung 6 normalerweise keinen schädlichen Einfluß auf die Datenregistrierung im Fahrdatenregistriergerät 2 nehmen.

Die an die Steuereinheit 202 gelegten Interruptsignale bewirken normalerweise einen besonderen, vorrangigen Eingriff in das regulär ablaufende Programm dieser Einheit oder versetzen diese aus einem Ruhezustand heraus in einen aktiven Zustand. Dies gilt insbesondere für das vom Zeitgeber 203 abgegebene Interruptsignal, wobei der Zeitgeber 203 mit festem Zeittakt, bevorzugt im Sekundenrhythmus, einen Impuls auf die Interruptleitung 230 abgibt, welche daraufhin vordefinierte, turnusmäßige Aufgaben, wie an späterer Stelle beschrieben, mit relativ hoher Geschwindigkeit abarbeitet (innerhalb einiger Zehntelsekunden) und daraufhin wieder in einen Zustand minimaler Aktivität (Ruhezustand) zurückkehrt. Eine weitere Funktion des Zeitgebers ist es, auf Abfrage durch die Steuereinheit 202 die aktuelle Uhrzeit und das korrekte Datum zu liefern, (Real Time Clock, RTC ), gegebenenfalls in einer speziell codierten Form gemäß üblichen Vereinbarungen beispielsweise unter Bezugnahme auf einen Referenzzeitpunkt 00:00 Uhr mitteleuropäischer Zeit des 01.01.1990. Es ist von Vorteil, für den Zeitgeber eine Ausführungsform zu wählen, die es gestattet, dem Zeitgeber bei Neuinstallation das aktuelle Datum und die genaue Uhrzeit einzuspeichern. Wird eine eventuelle Abweichung der Uhrzeit des Zeitgebers von einer tatsächlichen Uhrzeit festgestellt, so wird dieses im Wege einer Nachsynchronisation behoben. Hierzu dient die Datenleitung 220, welche für Datentransfer in bidirektionaler Richtung geeignet ist und auch an die Systemkomponente Arbeitsspeicher (RAM) 205, Schnittstelleninterface 204, und Datenspeicher 206 geführt und mit diesen Komponenten verbunden ist. Mit 211 ist ein dem Zeitgeber 203 zugeordneter Schwingquarz.

Ein weiteres die die Steuereinheit 202 aktivierendes und auf der Leitung 232 übertragenes Interrupt-Signal, ist ein Spannungsüberwachungssignal, welches von einer Spannungsüberwachungsschaltung generiert werden kann, welche mit dem Netzteil und der Ladeschaltung 208 zusammenarbeitet. Sofern die extern zugeführte Spannungsversorgung und auch die intern durch den Spannungserzeuger 209 generierte Spannung nicht mehr ausreichen sollte, den ordnungsgemäßen Betrieb des Fahrdatenregistriergerätes 2 aufrechtzuerhalten, wird ein Alarmsignal erzeugt, welches veranlaßt, daß die (in der Regel flüchtigen) Daten des Arbeitsspeichers 250 (RAM), welcher als Schreib-Lese-Speicher ausgelegt ist, in den Datenspeicher 206 transferiert werden, welcher ebenfalls als Schreib-Lesespeicher ausgelegt ist, dessen Speicherinhalte aber nichtflüchtig sind, d.h. daß dieser Speicher seine Daten auch ohne Stromversorgung über lange Zeiträume bewahrt. Zum Zwecke des Datentransfers wird in dem beschriebenen Ausnahmefall auf eine Energiereserve zurückgegriffen, welche in einem für diesen Zweck vorgesehenen Akkumulator 212 oder Kondensator mit einer Kapazität von einigen Amperesekunden gespeichert ist. Nach dem Transfer der relevanten Daten versetzt sich die Steuereinheit 202 sodann in einen Stop-Zustand, den sie erst dann verlassen kann, wenn die Versorgungsspannung stabil und in ausreichender Höhe wiederhergestellt ist.

Auf diese Weise ist die Registriereinrichtung gegen absichtlich oder unabsichtlich herbeigeführte Spannungsunterbrechung mehrfach geschützt.Steht die Versorgungsspannung an der Spannungsversorgungsleitung 3 zur Verfügung oder befindet sich ein abzutastendes Getriebezahnrad in Bewegung, so wird der Akkumulator 212 mittels der Ladeschaltung 208 geladen gehalten.

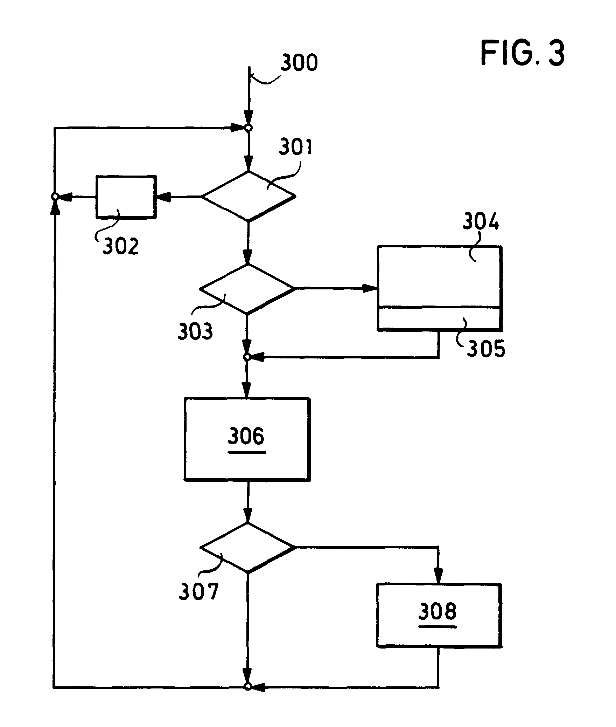

In Fig. 3 wird mittels eines Flußdiagramms der logische Ablauf des in dem Fahrdatenregistriergerät 2 und dessen Steuereinheit 202 befindlichen Programms erläutert.Ausgehend von einem Startschritt S 300 wird in einem weiteren Schritt S 301 durch die Steuereinheit 202 ermittelt, ob sich das Fahrzeug in Bewegung befindet oder nicht. Ist dies nicht der Fall, d.h. wenn für einen Zeitraum von etwa 15 Sekunden keine Bewegung eines Getriebezahnrades festgestellt wurde, so wird im Schritt S 302 ein einzelnes Merker-Bit der Steuereinheit 202 zurückgesetzt (gelöscht) und der Vorgang beginnt mit Startschritt S 300 von neuem. Befindet sich jedoch das Fahrzeug in Bewegung, so wird das genannte Merker-Bit in einer geeigneten Unterroutine im Schritt S 303 abgefragt. Befindet es sich im gesetzten, Aktivität anzeigenden Status, so wird zum nächsten Schritt übergegangen und Schritt S 306 ausgeführt. Anderenfalls wird in einem Folgeschritt S 304 der Zeitgeber 203 durch die Steuereinheit 202 gelesen und die so gelesene Uhrzeit- und Datumsinformation in einen entsprechenden Speicher-bzw. Merk-Bereich des Arbeitsspeichers 205 übertragen, worauf in einem Schritt S 305 das Fahrtbit unabhängig von seinem vorherigen Zustand 1 gesetzt und damit der Status des Fahrzeuges nämlich Bewegung registriert wird. Hierauf wird durch die Steuereinheit 202 ebenfalls Schritt S 306 abgearbeitet, welcher darin besteht, daß der aktuelle Geschwindigkeitswert des Fahrzeuges ermittelt und in den Arbeitsspeicher 205 abgespeichert wird. Zu diesem Zweck wird mit hoher Genauigkeit die Zeit ermittelt, die zwischen der Annäherung zweier Zähne des Zahnrades 1 an den Sensor 201 verstreicht. Diese stellt ein umgekehrt proportionales, exaktes Maß für die Geschwindigkeit des Fahrzeuges dar. Der Prozessor arbeitet nach Erledigung des Schritts S 306 sodann Schritt S 307 ab, bei dem überprüft wird, ob der Arbeitsspeicher 205 vollständig mit Zeit- und Geschwindigkeitsdaten gefüllt ist oder nicht. Ist dies nicht der Fall, verzweigt das Programm erneut zum Startschritt S 300, anderenfalls, was bei bewegtem Fahrzeug etwa alle 8,5 Minuten stattfindet, werden die Daten des Arbeitsspeichers während des Programmschrittes S 308 in den nichtflüchtigen Datenspeicher 206 übertragen, wobei gegebenenfalls die im Zeitrang älteste Information des Datenspeichers in löschender Weise überschrieben wird, da der Datenspeicher 206 nach Art eines Ringspeichers organisiert ist. Dies geschieht jeweils blockweise, wobei ein Block typisch 512 Bytes (Informationseinheiten) umfaßt. Nach Beendigung des Programmschrittes S 308 beginnt das Programm wieder beim Startschritt S 300. Schritt S 301 wird alternativ auch dadurch begonnen, daß via Interruptleitung 231 signalisiert wurde, daß sich das Fahrzeug in Bewegung befindet.

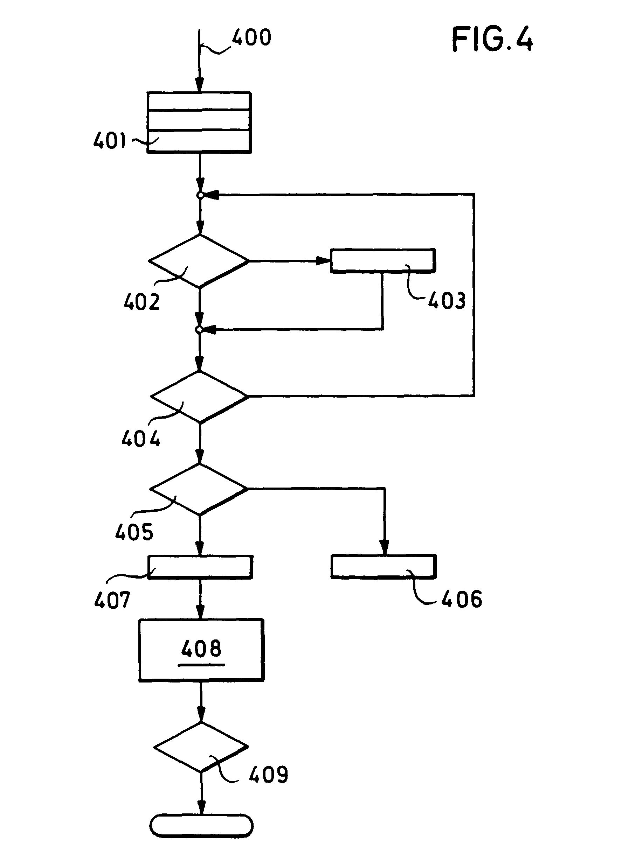

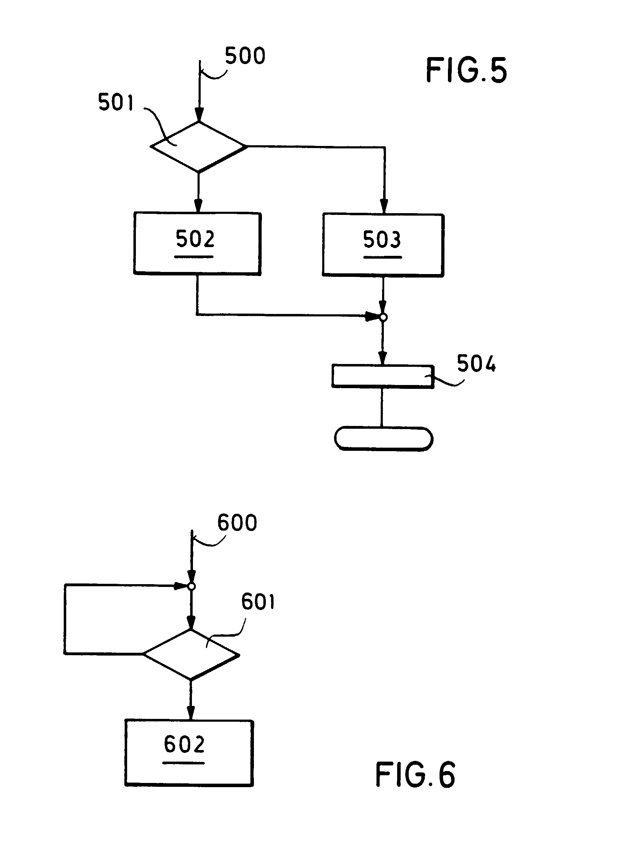

In Fig. 4 wird der logische Ablauf des Programms zur Erfassung einer aktuellen Geschwindigkeit dargestellt, welches beginnend mit dem Startschritt 400 eine Alternative zur obengenannten Geschwindigkeitsermittlung darstellt. Hierbei werden in einem Rhythmus von etwa 1 sek zunächst in einem Programmschritt S 401 zwei elektronische Zählwerke, ein Ereigniszähler und ein Zeitzähler, die in der Steuereinheit verwirklicht sind, zurückgesetzt, also jeweils mit dem Wert "0" beschrieben. Im Folgeschritt S 402 wird überprüft, ob während einer vorausgegangenen Beobachtungszeit eine ansteigende Flanke des von Sensor 201 abgegebenen Sensorsignals beobachtet wurde. Ist dies der Fall, so wird im Schritt S 403 der Ereigniszähler um den Wert 1 erhöht, also incrementiert, worauf das Programm mit Schritt S 404 fortfährt. Schritt S 404 wird auch im Anschluß an Schritt S 402 ausgeführt, sofern keine ansteigende Flanke des Sensor-Signals beobachtet wurde. In Schritt S 404 wird überprüft, ob der Zeitzähler bereits eine verstrichene Zeit von mehr als einer Sekunde festgestellt hat. Ist dies nicht der Fall, so wird zu Schritt S 402 zurückverzweigt, anderenfalls wird mit Schritt S 405 fortgefahren. In diesem Schritt wird überprüft, ob der Ereigniszähler noch auf Null steht. Ist dies der Fall, so befindet sich das Fahrzeug nicht in Bewegung, und das Programm verzweigt zu Schritt S 406, in dem das aus Schritt S 302 bekannte Fahrtbit zurückgesetzt wird (gelöscht wird). Alternativ wird auf eine aktuelle Bewegung des Fahrzeuges geschlossen und das Fahrtbit in Schritt S 407 als Merker gesetzt. Nach diesem Schritt fährt das Programm sodann mit Schritt S 408 fort, in dem der im Ereigniszähler registrierte Wert mittels fahrzeugspezifischer Konstanten und dem Maß der verstrichenen Zeit zu einem Geschwindigkeitswert verrechnet wird. Ein solcherart errechneter numerischer Geschwindigkeitswert wird im Geschwindigkeitsspeicher-Segment des Arbeitsspeichers 205 abgelegt, wobei die entsprechenden Daten via Datenleitung 220 transferiert werden. Im nachfolgenden Schritt S 409 wird sodann ein Fahrtzähler, der in der Steuereinheit 202 eingerichtet ist, incrementiert, d.h. um 1 erhöht. Nach Ablauf dieses Programms steht die Steuereinheit 202 für weitere reguläre oder durch ein Interrupt-Signal ausgelöste Aktivitäten zur Verfügung. Fig. 5 erläutert in einem weiteren Flußdiagramm, wie in einer nachfolgenden, zeitgesteuerten Routine, welche alle 5 Minuten erneut abläuft, der Fahrtzähler in Schritt S 501 daraufhin überprüft wird, ob der Zählerstand dieses Zählers einen Wert von z.B. 150 bereits überschritten hat.Ist dies der Fall, so wird in Schritt S 502 im bereits genannten, nach Ringspeicherart organisierten Speicher 206 unter der Rubrik "Fahrzeugeinsatz" ein entprechender Registriervermerk durch das Setzen eines hierfür zugeordneten Speicher-Bits eingetragen. Anderenfalls wird zu Schritt S 503 verzweigt und im Speicher 206 an der gleichen Stelle ein entsprechend gegenlautender Eintrag vorgenommen. In beiden Fällen wird daraufhin zu Schritt S 504 verzweigt, in dem der Fahrtzähler auf Null, also zurückgesetzt wird.Nach Abarbeitung des Schritts S 504 ist diese, mit Schritt S 500 beginnende Interruptroutine abgearbeitet, die Steuereinheit 202 steht für eine weitere interruptbedingte oder turnusmäßige Datenverarbeitung zur Verfügung.

Fig. 6 erläutert den Programmablauf bei beobachteter Verringerung der Versorgungsspannung des Fahrdatenregistriergerätes. Eine Reduzierung dieser Spannung unter ein vorgegebenes Limit löst (S 600) über die Interruptsignalleitung 232 eine Interrupt-Routine aus, welche mit einem ersten Programmschritt S601 überprüft, ob die Versorgungsspannung weiterhin unterhalb eines Minimumalwertes liegt, so daß eine Unterbrechung der Versorgungsspannung angenommen werden muß. Ist dies nicht der Fall, so wird dieser Testschritt noch mehrfach wiederholt, bis die Versorgungsspannung wieder einen zulässigen Wert aufweist. Anderenfalls (bei zu geringer Versorgungsspannung) werden mit dem Programmschritt S 602 unter Verwendung der per Batterie erzeugten Ersatz-Versorgungsspannung die Daten aus dem (flüchtigen) Arbeitsspeicher (RAM) 205 in den Festspeicher, den Datenspeicher 206 übertragen. Die Steuereinheit 202 wird ihre reguläre Aktivität erst wieder aufnehmen, wenn die Versorgungsspannung größer als ein vorgegebener Mindestwert ist.

Der Vollständigkeit halber sei noch die zur Reduzierung des Speicherbedarfs für die Speicherung der Fahrdaten verwendete Maßnahme erläutert. Da bei stillstehendem Fahrzeug keine fortlaufende Datenspeicherung erforderlich ist, wird bei Beendigung der Fahrt zunächst nur der Zeitpunkt des Stillstand-Beginns registriert. Bei erneutem Fahrtbeginn wird in Standard-Darstellungsweise die Geschwindigkeits-Zeit-Chronologie registriert. Dazu wird für Datum und Uhrzeit eine 4-byte-Codierung verwendet, welche einen Sekunden-Differenzwert relativ zum Jahresbeginn 1990 angibt. Die jeweils nachfolgenden Geschwindigkeitswerte werden im zugehörigen Geschwindigkeitsspeicher abgelegt. Die Geschwindigkeit wird nicht in absolut codierten Werten gespeichert, sondern in differentieller Form, was einer Registrierung der Beschleunigung entspricht. Da für übliche Kraftfahrzeuge wegen derer Massen die Beschleunigungswerte begrenzt sind, genügt es, jede Sekunde in codierter Form das Vorzeichen der Beschleunigung und einen zugeordneten Betragswert (in relativ grober Stufung) abzuspeichern, so daß ein Zwei-Bit-Wert pro Speicherwert ausreicht. Auf diese Weise ist es zum Beispiel unter Nutzung geeigneter Codierungsvereinbarungen möglich, mit einem Speicherbaustein mit einer Speicherkapazität von einigen hundert Kilobytes einen Fahrtverlauf zu rekonstruieren, der einen vergangenen Zeitraum von bis zu ca. 500 Stunden umfaßt.

Zusammenfassend sei nochmals hervorgehoben, daß bei den üblichen Fahrtschreibern bzw. bei den üblichen Fahrtschreibersystemen mit einem getriebeseitig angeordneten Geber und einem entfernt davon in der Regel im Fahrerhaus angeordneten die Meß-, Anzeige- und Registriermittel beinhaltenden Fahrtschreiber mit der Vielzahl der erforderlichen Plombierungen, den mechanischen Schutzmaßnahmen der Verbindungsleitungen und deren Anschlüsse, den Maßnahmen für eine gleichzeitige invertierte Übertragung der Gebersignale und den Vorkehrungen die Manipulationen kennzeichnende Aufzeichnungen erzeugen ein erheblicher Aufwand getrieben wird, um Manipulationen zu erschweren oder sie, nachdem sie erfolgt sind, nachzuweisen.

Mit der Erfindung welcher der Gedanke zugrunde liegt, das manipulationsrelevante Registrieren von Fahrdaten so nahe wie möglich an die Quelle der Fahrtinformationen zu legen, wird der Aufwand grundsätzlich vermieden. Das heißt, das Gesamtsystem wird, da auch EMV-Probleme keine Rolle spielen, erheblich verbilligt. Manipulationen sowohl an den Geberleitungen als auch am Registriergerät sowie Sendereinstrahlungen auf die Geberleitungen sind von vornherein ausgeschlossen. Ferner ergibt sich eine größere Flexibilität bei der Anordnung der dem Fahrdatenregistriergerät zugeordneten Anzeige- und Abfragegeräten und somit des Gesamtsystems m. a. Worten, es steht durch den Wegfall des Registriergerätes herkömmlicher Bauart im ohnehin dichtbestückten Armaturenbrett mehr Raum für die Anzeige- und Abfragegeräte zur Verfügung. Das Fahrdatenregistriergerät bzw. die erfindungsgemäße Geber-Registrier-Einheit ist außerdem auf einfache Weise montierbar, das heißt mit dem Getriebegehäuse verbindbar, wobei auch die Austauschbarkeit mit einfachen Mitteln verwirklicht werden kann. Das Gerät selbst ist bereits so konzipiert, daß es sich für eine Nachrüstung eignet bzw. mit bereits im Fahrzeug installierten Instrumenten kompatibel ist. Die vergleichsweise niedrigen Herstell- und Montagekosten gestatten es, bei einem Ausfall, einem Getriebewechsel oder Änderung der Hinterachsübersetzung des Fahrzeuges das Fahrdatenregistriergerät komplett auszutauschen.

## Patentansprüche

1. Fahrdatenregistriergerät (2) für Kraftfahrzeuge zum Erfassen von zeit- und/oder geschwindigkeitsabhängigen Fahrdaten,
**dadurch gekennzeichnet,**
daß das Fahrdatenregistriergerät (2) in miniaturisierter Bauform einen Sensor (201) und wenigstens eine eine Steuereinheit (202), einen Arbeitsspeicher (205) und einen Datenspeicher (206) umfassende, temperaturunempfindliche Prozessor- und Speicherelektronik sowie eine Anpaßelektronik (204, 210) aufweist und
daß das Fahrdatenregistriergerät (2) unmittelbar an oder in einer Gehäuseschale eines Fahrzeuggetriebes (1) angebracht ist.

2. Fahrdatenregistriergerät nach Anspruch 1,
**dadurch gekennzeichnet,**
daß es einen Energiespeicher in Form einer Batterie (212) oder eines Kondensators aufweist, dessen gespeicherte elektrische Energie mindestens so groß ist, daß bei Unterbrechung einer externen Spannungsversorgung des Fahrdatenregistriergerätes (2) eine für diesen Fall vorgesehene Sicherungs-Abspeicherung von aktuellen Fahrdaten in einen nichtflüchtigen Datenspeicher (206) des Fahrdatenregistriergerätes (2) unter ausschließlicher Verwendung der gespeicherten Energie des Energiespeichers vollständig ausführbar ist.

3. Fahrdatenregistriergerät nach einem der vorhergehenden Ansprüche,
**dadurch gekennzeichnet,**
daß sein Gehäuse mit dem Fahrgestell eines Kraftfahrzeuges in elektrisch leitender Verbindug steht und die Anzahl seiner zusätzlichen Anschlußleitungen wenigstens eins beträgt.

4. Fahrdatenregistriergerät nach einem der vorhergehenden Ansprüche,
**dadurch gekennzeichnet,**
daß zumindest eine seiner Anschlußleitungen aus einem Lichtleiter besteht.

5. Fahrdatenregistriergerät nach einem der vorhergehenden Ansprüche,
**dadurch gekennzeichnet,**
daß die Aufzeichnung der Fahrdaten mittels einer komprimierenden, redundanzreduzierenden Codierung vorgenommen wird.

6. Fahrdatenregistriergerät nach einem der vorhergehenden Ansprüche,
**dadurch gekennzeichnet,**
daß die gespeicherten Fahrdaten mit hoher zeitlicher Genauigkeit nach Datum und Uhrzeit abgespeichert werden und vermittels eines extern angeschlossenen Datensichtgerätes ausgelesen und rekonstruiert werden.

7. Fahrdatenregistriergerät nach einem der vorhergehenden Ansprüche,
**dadurch gekennzeichnet,**
daß das Fahrdatenregistriergerät (2) einen internen Zeitgeber (203) und eine Synchronisationseinrichtung aufweist, wobei die Synchronisationseinrichtung Uhrzeit- und Datumssignale eines externen, genauen Zeitgebers erkennt und den internen Zeitgeber (203) auf ein exaktes Datum und Uhrzeit nachjustiert, sofern dessen Uhrzeit und Datumssignale nicht mit den genauen Signalen des externen Zeitgebers übereinstimmen.

8. Fahrdatenregistriergerät nach einem der vorhergehenden Ansprüche,
**dadurch gekennzeichnet,**
daß innerhalb des Fahrdatenregistriergerätes (2) ein elektrischer Generator (209) vorgesehen ist, welcher das Fahrdatenregistriergerät (2) vollständig oder zumindest mit einem Teil der benötigten elektrischen Leistung versorgt.

9. Fahrdatenregistriergerät nach Anspruch 8,
**dadurch gekennzeichnet,**
daß der Generator (209) mindestens einen Permanentmagneten und eine Spule aufweist, welche bei Bewegung des Kraftfahrzeuges eine Wechselspannung abgibt und wobei die Wechselspannung dem Fahrdatenregistriergerät (2) gleichzeitig als Geschwindigkeitssignal dient.

10. Fahrdatenregistriergerät nach einem der vorhergehenden Ansprüche,
**dadurch gekennzeichnet,**
daß die Mehrzahl der durch die Steuereinheit (202) ausgeführten Teilprogramme aus vergleichsweise kurzen, durch ein Interruptsignal ausgelösten Programmteilen von vergleichsweise hohem Rechenaufwand bestehen und die Steuereinheit (202) restliche Programmschritte in einer energiesparenden Betriebsweise und mit vergleichsweise geringem Rechenaufwand abarbeitet.

## Claims

1. Driving data recording device (2) for motor vehicles for the acquisition of time- and/or speed-dependent driving data, characterized in that the driving data recording device (2), of miniaturized design, has a sensor (201) and at least temperature-insensitive processor and memory electronics comprising a control unit (202), a main memory (205) and a data memory (206), and also matching electronics (204, 210), and in that the driving data recording device (2) is fitted directly on or in a housing shell of a vehicle gearbox (1).

2. Driving data recording device according to Claim 1, characterized in that it has an energy store in the form of a battery (212) or capacitor, the stored electrical energy of which is at least sufficient to be able, in the event of interruption of an external voltage supply to the driving data recording device (2), to carry out a complete back-up storage, provided for this eventuality, of current driving data to a non-volatile data memory (206) of the driving data recording device (2) using solely the stored energy of the energy store.

3. Driving data recording device according to one of the preceding claims, characterized in that its housing is electrically conductively connected to the chassis of a motor vehicle and the number of its additional connecting lines is at least one.

4. Driving data recording device according to one of the preceding claims, characterized in that at least one of its connecting lines comprises a light guide.

5. Driving data recording device according to one of the preceding claims, characterized in that the recording of the driving data is performed by means of compressing, redundancy-reducing coding.

6. Driving data recording device according to one of the preceding claims, characterized in that the stored driving data are stored by date and time of day with great accuracy in terms of time and are read out and reconstructed by means of an externally connected data display device.

7. Driving data recording device according to one of the preceding claims, characterized in that the driving data recording device (2) has an internal time generator (203) and a synchronizing device, the synchronizing device detecting time-of-day and date signals of an external, exact time generator and readjusting the internal time generator (203) to an exact date and time of day if its time of day and date signals do not correspond to the exact signals of the external time generator.

8. Driving data recording device according to one of the preceding claims, characterized in that there is provided inside the driving data recording device (2) an electrical generator (209) which supplies the driving data recording device (2) completely or at least partly with the electrical power required.

9. Driving data recording device according to Claim 8, characterized in that the generator (209) has at least a permanent magnet and a coil, which delivers an alternating voltage when the motor vehicle is moving, and the alternating voltage simultaneously serving as a speed signal for the driving data recording device (2).

10. Driving data recording device according to one of the preceding claims, characterized in that the majority of subprograms executed by the control unit (202) comprise comparatively short program parts initiated by an interrupt signal and of comparatively high computing complexity and the control unit (202) executes remaining program steps in an energy-saving operating mode and with comparatively little computing complexity.

## Revendications

1. Appareil enregistreur de données de route (2) pour des véhicules automobiles, pour l'acquisition de données de route en fonction du temps et/ou de vitesses,
caractérisé par le fait
que ledit appareil enregistreur de données de route (2) de type miniaturisé présente, d'une part, un capteur (201) et au moins une électronique thermorésistante de traitement et de mémorisation contenant une unité de commande (202), une mémoire de travail (205) et une mémoire de données (206), ainsi que, d'autre part, une électronique d'adaptation (204, 210) et
que ledit appareil enregistreur de données de route (2) est disposé directement sur ou dans une coquille de carter d'une boîte de vitesses de véhicule (1).

2. Appareil enregistreur de données de route selon la revendication 1,
caractérisé par le fait
qu'il présente un accumulateur d'énergie sous forme d'une batterie (212) ou d'un condensateur dont l'énergie électrique accumulée est au moins suffisante pour que, en cas d'interruption d'une alimentation en tension externe de l'appareil enregistreur de données de route (2), un stockage de sauvegarde de données de route actuelles, prévu pour ce cas, dans une mémoire de données non volatile (206) de l'appareil enregistreur de données de route (2) soit complètement réalisable avec utilisation exclusive de l'énergie stockée de l'accumulateur d'énergie.

3. Appareil enregistreur de données de route selon l'une quelconque des revendications précédentes,
caractérisé par le fait
que son boîtier est électriquement relié au châssis d'un véhicule automobile et que le nombre de ses lignes de raccordement supplémentaires s'élève au moins à un.

4. Appareil enregistreur de données de route selon l'une quelconque des revendications précédentes,
caractérisé par le fait
qu'au moins l'une des lignes de raccordement est constituée d'un câble à fibres optiques.

5. Appareil enregistreur de données de route selon l'une quelconque des revendications précédentes,
caractérisé par le fait
que l'enregistrement des données de route sera effectué au moyen d'un codage comprimant réduisant la redondance.

6. Appareil enregistreur de données de route selon l'une quelconque des revendications précédentes,
caractérisé par le fait
que les données de route stockées seront mises en mémoire avec une haute précision temporelle selon la date et l'heure et seront extraites et reconstruites au moyen d'un écran de visualisation de données externe raccordé.

7. Appareil enregistreur de données de route selon l'une quelconque des revendications précédentes,
caractérisé par le fait
que l'appareil enregistreur de données de route (2) présente un générateur de signaux d'horloge interne (203) et un dispositif de synchronisation, ledit dispositif de synchronisation détectant des signaux de l'heure et de la date d'un générateur de signaux d'horloge externe précis et réajustant le générateur de signaux d'horloge interne (203) sur une date et une heure exactes pour autant que les signaux d'heure et de date de ce dernier ne correspondraient pas aux signaux précis du générateur de signaux d'horloge externe.

8. Appareil enregistreur de données de route selon l'une quelconque des revendications précédentes,
caractérisé par le fait
qu'au sein de l'Appareil enregistreur de données de route (2) est prévu un générateur électrique (209) qui alimente ledit appareil enregistreur de données de route (2) complètement ou tout au moins avec une partie de la puissance électrique nécessaire.

9. Appareil enregistreur de données de route selon la revendication 8,
caractérisé par le fait
que le générateur (209) présente au moins un aimant permanent et une bobine qui fournit, lors du mouvement du véhicule, une tension alternative et ladite tension alternative servant simultanément de signal de vitesse à l'appareil enregistreur de données de route (2).

10. Appareil enregistreur de données de route selon l'une quelconque des revendications précédentes,
caractérisé par le fait
que la plus grande partie des programmes partiels exécutés par l'unité de commande (202) sont constitués de tronçons de programme relativement courts, déclenchés par un signal d'interruption, d'une intensité de calcul comparativement importante et que l'unité de commande (202) exécute des phases de programme restantes en un mode de fonctionnement à économie d'énergie et avec une intensité de calcul comparativement peu importante.
